# EUROPEAN PATENT APPLICATION

(11) **EP 4 660 088 A2**
(43) Date of publication of application: **10.12.2025**
(21) Application number: 25181132.9
(22) Date of filing: 05.06.2025
(51) Int. Cl.: B65B 19/22, B65B 35/46, B65G 47/32, B65G 47/84, B65B 35/50

(54) **A WRAPPING UNIT AND METHOD TO PRODUCE, TOGETHER, TWO SEALED WRAPS CONTAINING TWO CORRESPONDING GROUPS OF SMOKING ARTICLES**

(30) Priority: 05.06.2024 IT 202400012832
(71) Applicant: G.D S.p.A., 40133 Bologna (IT)
(72) Inventor: BENASSI, Massimo, 40133 BOLOGNA (IT); SARTI, Stefano, 40133 BOLOGNA (IT); MARRONE, Quintino, 40133 BOLOGNA (IT); MECCAGNI, Mattia, 40133 BOLOGNA (IT); SQUARZONI, Michele, 40133 BOLOGNA (IT)
(74) Representative: Studio Torta S.p.A.

(57) **Abstract**

A wrapping unit (10) and method to produce, together, two sealed wraps (3) containing two corresponding groups (5) of smoking articles. The following are provided: a first transfer station (S2); a second transfer station (S3); a transport drum (14) that is provided with at least one pocket (15) designed to contain two sealed wraps (3) side by side and mounted rotatably around a rotation axis (16) to move the pocket (15) from the first transfer station (S2) where the pocket (15) receives the two sealed wraps (3) side by side and arranged at a given distance from one another and the second transfer station (S3) where the pocket (15) releases the two sealed wraps (3) side by side; and a pushing element (17) which is arranged in a fixed position with respect to the transport drum (14), extends between the first transfer station (S2) and the second transfer station (S3), and is shaped so as to progressively push a sealed wrap (3) lying inside the pocket (15) towards the other sealed wrap (3) lying inside the pocket (15) so that, in the second transfer station (S3), the two sealed wraps (3) lying inside the pocket (15) are closer to one another with respect to the first transfer station (S2).

## Description

### CROSS-REFERENCE TO RELATED APPLICATIONS

This patent application claims priority from Italian patent application no. 102024000012832 filed on June 5, 2024, the entire disclosure of which is incorporated herein by reference.

### TECHNICAL FIELD

The present invention relates to a wrapping unit and method to produce, together, two sealed wraps containing two corresponding groups of smoking articles.

### PRIOR ART

Rigid cigarette packets with a hinged lid are currently the most widely used cigarette packets on the market, since they are simple to manufacture, easy and practical to use and offer good protection for the cigarettes contained inside them.

A rigid cigarette packet with a hinged lid comprises a wrap formed of a group of cigarettes wrapped in a wrapping sheet and a rigid outer casing that houses the wrap inside it. The outer casing is formed of a cup-shaped container, which houses the wrap and has an open upper end, and a lid, which is also cup-shaped and is hinged to the container so as to rotate, with respect to the container itself, between an open position and a closed position of the open end.

In a traditional cigarette packet, the group of cigarettes is wrapped in a rectangular wrapping sheet of foil paper without glue. In order to maintain the integrity of the cigarette tobacco, it is proposed to manufacture a sealed wrap (waterproof) formed of a wrapping sheet of waterproof and heat-sealable material having an opening for extraction of the cigarettes, which is closed by a reusable closing label.

A cigarette packet commercially known as "*twin*" has been known for many years, comprising a rigid outer container that houses inside it two groups of cigarettes (which is the origin of the commercial name "*twin*" of the cigarette packet), which are arranged alongside one another and are wrapped in corresponding wrapping sheets.

Patent application WO2023180862A1 describes a packaging machine that manufactures a rigid cigarette packet with hinged lid of the "*twin*" type and in which the two sealed wraps are obtained simultaneously by operating on a dual line. Once manufacturing of the two sealed wraps side by side has been completed, the two sealed wraps side by side are inevitably at a given distance from one another (because free space is needed between the two sealed wraps in order to be able to perform the folding and sealing operations) and it is therefore necessary to bring them close to each other and in mutual contact before starting to fold around the two sealed wraps a blank that will form the container and the hinged lid. Currently, two sealed wraps side by side are brought close to each other (or pushed towards one another) by means of a motorised pushing member.

Patent application WO2023112065A1 describes a packaging machine for making cigarette packets and comprising a transfer drum to move groups of cigarettes and a feed device and a receiving device to feed and receive groups of cigarettes to and from the transfer drum.

Patent application DE102008015192A1 describes the formation of a group of superimposed cigarette packets by feeding the cigarette packets to a formation station by means of lower and upper conveyors along a lower path and an upper path that are coplanar and converge in the formation station.

### DESCRIPTION OF THE INVENTION

The object of the present invention is to provide a wrapping unit and method to produce, together, two sealed wraps containing two corresponding groups of smoking articles, said wrapping unit and method being simple to create.

In accordance with the present invention, a wrapping unit and method to produce, together, two sealed wraps containing two corresponding groups of smoking articles, are provided, as claimed in the appended claims.

Furthermore, in accordance with the present invention, a packet for smoking articles containing two sealed wraps side by side is provided, as claimed in the appended claims.

The claims describe embodiments of the present invention and form an integral part of this description.

### BRIEF DESCRIPTION OF THE DRAWINGS

The present invention will now be described with reference to the appended drawings, which illustrate a non-limiting embodiment thereof, wherein:
- Figure 1 is a perspective front view and in a closed configuration of a rigid cigarette packet of the "twin" type, i.e. containing two sealed wraps side by side;
- Figure 2 is a perspective rear view of the cigarette packet of Figure 1 in a closed configuration;
- Figure 3 is a perspective front view of the cigarette packet of Figure 1 in an open configuration;
- Figure 4 is a perspective front view of a single sealed wrap contained in the cigarette packet of Figure 1;
- Figure 5 is a perspective view of a group of cigarettes coupled to a reinforcement element and contained in the sealed wrap of Figure 4;
- Figure 6 is a plan view of a wrapping sheet used to obtain the sealed wrap of Figure 4;
- Figure 7 is a schematic view of a part of a wrapping unit of a packaging machine that manufactures the cigarette packet of Figure 1; and
- Figures 8 to 11 are different views of a transfer drum of the wrapping unit of Figure 7.

### PREFERRED EMBODIMENTS OF THE INVENTION

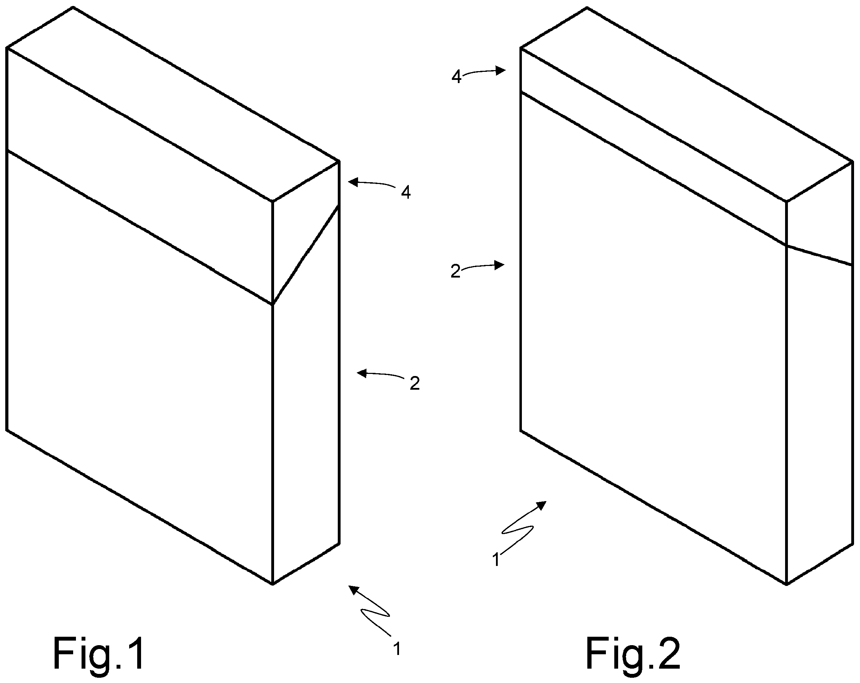

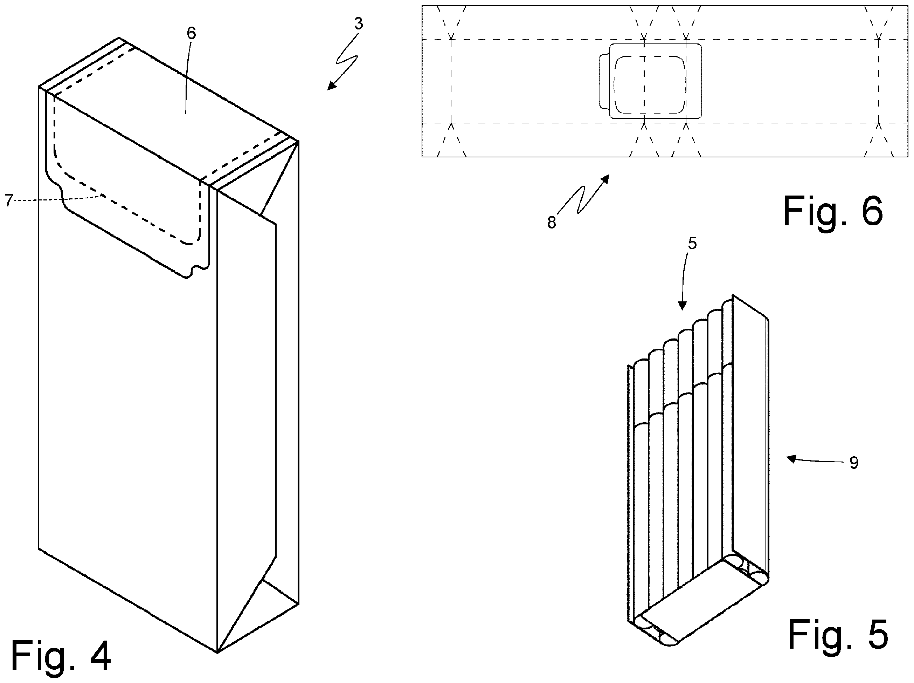

In Figures 1,2 and 3, the number 1 indicates, in its entirety, a "*twin*" rigid cigarette packet. The cigarette packet 1 comprises a container 2 formed of cardboard or rigid cardboard and shaped like a cup and a pair of sealed wraps 3 (one of which is shown in more detail in Figure 4) housed side by side inside the container 2.

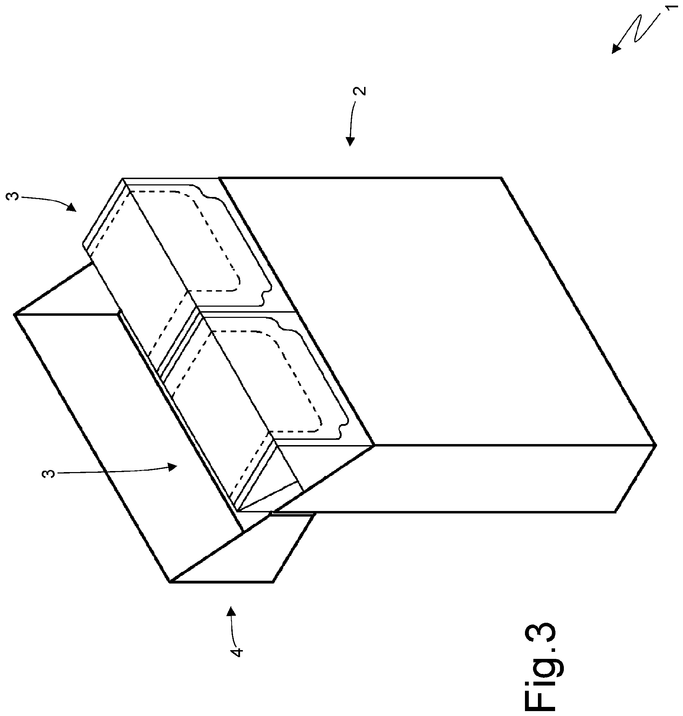

The container 2 has an open upper end and is provided with a lid 4, which is shaped like a cup and is hinged to the container 2 along a hinge (shown in Figure 2) to rotate, with respect to the container 2, between an open position (shown in Figure 3) and a closed position (shown in Figures 1 and 2) of the open upper end.

Each sealed wrap 3 (shown in more detail in Figure 4) encloses a group 5 of cigarettes with a parallelepiped shape (shown in Figure 5) and has superiorly and frontally an opening 6 for extraction of the cigarettes, which is delimited by a pre-weakened tearable line, is closed by a reusable closing label 7 and involves a portion of a front wall of the sealed wrap 3 and a portion of an upper wall of the sealed wrap 3.

According to a different embodiment not shown, the sealed wrap 3 does not have the extraction opening 6 and the relative closing label 7 and has a removable upper portion, which is separated from the rest of the sealed wrap 3 by a pre-weakened tearable line in order to be torn off upon first opening of the sealed wrap 3; in this embodiment, the sealed wrap 3 is preferably provided with a tearable opening strip to facilitate the breakage of the sealed wrap 3 along the pre-weakened line.

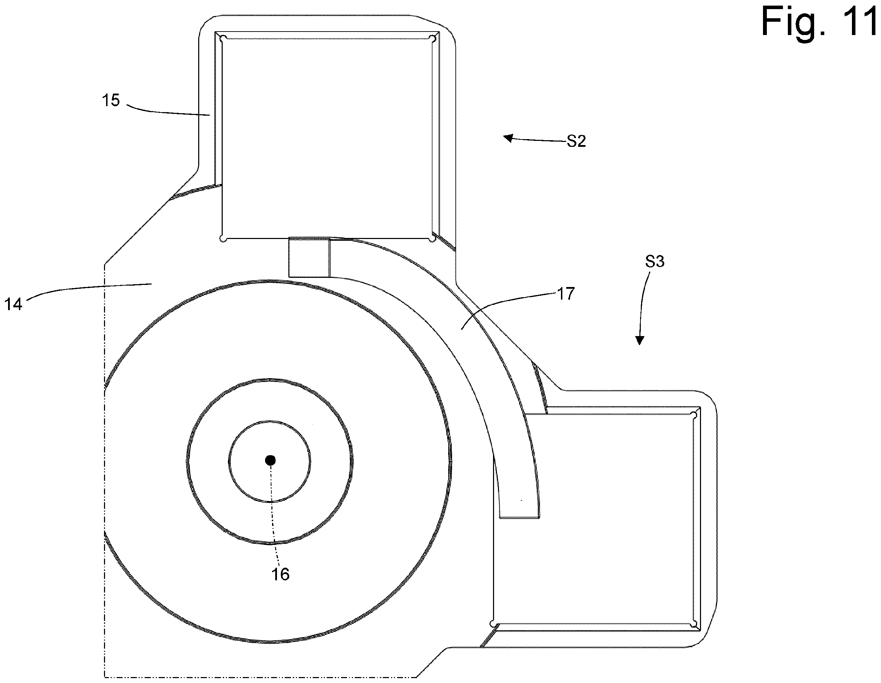

The sealed wrap 3 is obtained by folding a wrapping sheet 8 (shown in Figure 6), which has a rectangular shape, comprises at least one layer of airtight and heat-sealable plastic material, and is folded directly around the group 5 of cigarettes so as to be in direct contact with the cigarettes themselves. Once the wrapping sheet 8 has been folded around the group 5 of cigarettes to form the sealed wrap 3, the shape of the sealed wrap 3 itself is stabilised by performing a transverse heat sealing TS (shown schematically in Figure 11) of the superimposed portions of the wrapping sheet 8.

The sealed wrap 3 could comprise a reinforcement element 9 (shown in more detail in Figure 5), which is formed of cardboard or rigid cardboard, is shaped in a "U" shape and is arranged inside the sealed wrap 3 in contact with the group 5 of cigarettes.

The formation of the sealed wrap 3 provides for initially forming the group 5 of cigarettes and then folding the reinforcement element 9 around the group 5 of cigarettes; subsequently, the wrapping sheet 8 is folded around the group 5 of cigarettes coupled to the reinforcement element 9. The methods of folding the wrapping sheet 8 around the group 5 of cigarettes coupled to the reinforcement element 9 are known and are, for example, described in patent application WO2023180862A1; alternatively, the two open side edges of the wrapping sheet 5 could be closed by means of two longitudinal sealing flaps in place of the so-called "*soap bar fold*"*.*

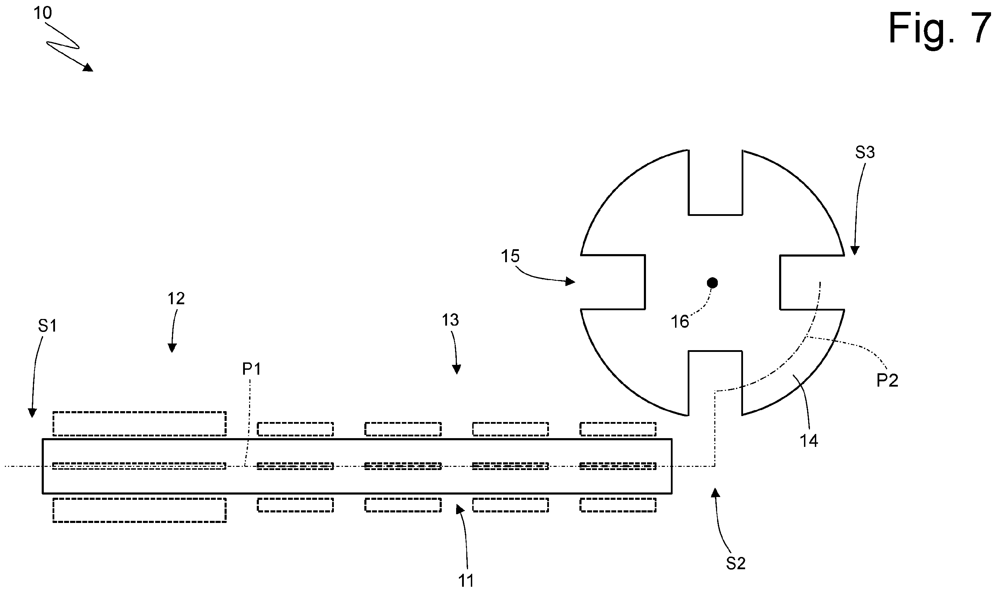

A packaging machine that is designed to manufacture the packet 1 of cigarettes described above generally operates with intermittent motion (i.e. a motion that provides for a cyclic alternation of motion phases and stop phases) and comprises a formation unit in which groups 5 of cigarettes are formed in succession, a wrapping unit 10 (schematically shown in Figure 7) in which a respective wrapping sheet 8 is wrapped around each group 5 of cigarettes to obtain a sealed wrap 3, and a wrapping unit in which a blank is wrapped around each pair of sealed wraps 3 coupled to one another (or arranged side by side) to obtain the container 2 provided with the lid 4.

According to what is shown in Figure 7, the wrapping unit 10 (which produces, together, two sealed wraps 3 containing two corresponding groups 5 of cigarettes) comprises a wrapping conveyor 11 that receives the pairs of groups 5 of cigarettes side by side and coupled to the wrapping sheets 8 and is designed to advance the pairs of groups 5 of cigarettes side by side and coupled to the wrapping sheets 8 along a straight wrapping path P1 to fold (finish folding) each wrapping sheet 8 around the corresponding group 5 of cigarettes. In particular, the wrapping path P1 starts at a transfer station S1 in which the wrapping conveyor 11 receives two groups 5 of cigarettes coupled to the wrapping sheets 8 at a time and ends in a transfer station S2 in which the pairs of complete sealed wraps 3 (i.e. each formed of a wrapping sheet 8 completely folded around a corresponding group 5 of cigarettes) leave the wrapping conveyor 11.

In particular, along the wrapping path P1 (i.e. while it is being advanced by the wrapping conveyor 11), each tubular wrap 3 is closed laterally by means of lateral folds that are subsequently stabilised by means of two longitudinal seals, completing (finishing) the creation of the tubular wrap 3.

The wrapping unit 10 comprises two folding devices 12, each coupled to the wrapping conveyor 11 and configured to fold a wrapping sheet 8 around the corresponding group 5 of articles, completing the formation of the sealed wrap 3, i.e. closing the two open ends of the wrapping sheet 8 folded in a tube shape. The wrapping conveyor 11 advances a succession of pairs of groups 5 of cigarettes side by side and coupled to the wrapping sheets 8 along the wrapping path P1 and therefore the two folding devices 12 are positioned side by side so as to perform together and simultaneously the folding of two wrapping sheets 8 around two groups 5 of cigarettes side by side.

The wrapping unit 10 comprises two sealing devices 13, each coupled to the wrapping conveyor 11 and configured to make longitudinal seals on a wrapping sheet 8 folded around the group 5 of cigarettes, completing the formation of the corresponding sealed wrap 3. Each sealing device 13 is coupled to the wrapping conveyor 11 and is arranged along the wrapping path P1 downstream of the respective folding device 12 to obtain a sealing on two sides of a wrapping sheet 8 folded around a corresponding group 5 of cigarettes.

The wrapping conveyor 11 advances a succession of pairs of groups 5 of cigarettes side by side and coupled to the wrapping sheets 8 along the wrapping path P1 and therefore the two sealing devices 13 are positioned side by side so as to perform together and simultaneously the sealing of two wrapping sheets 8 around two groups 5 of cigarettes side by side.

According to what is shown in Figure 7, the wrapping unit 10 comprises a transport drum 14 that is interposed between the wrapping conveyor 11 and a successive wrapping drum and forms the end part of the wrapping unit 10 (i.e. the wrapping drum arranged downstream of the transport drum 14 is part of the wrapping unit that folds a blank around a pair of sealed wraps 3 coupled to obtain a container 2 provided with a lid 4).

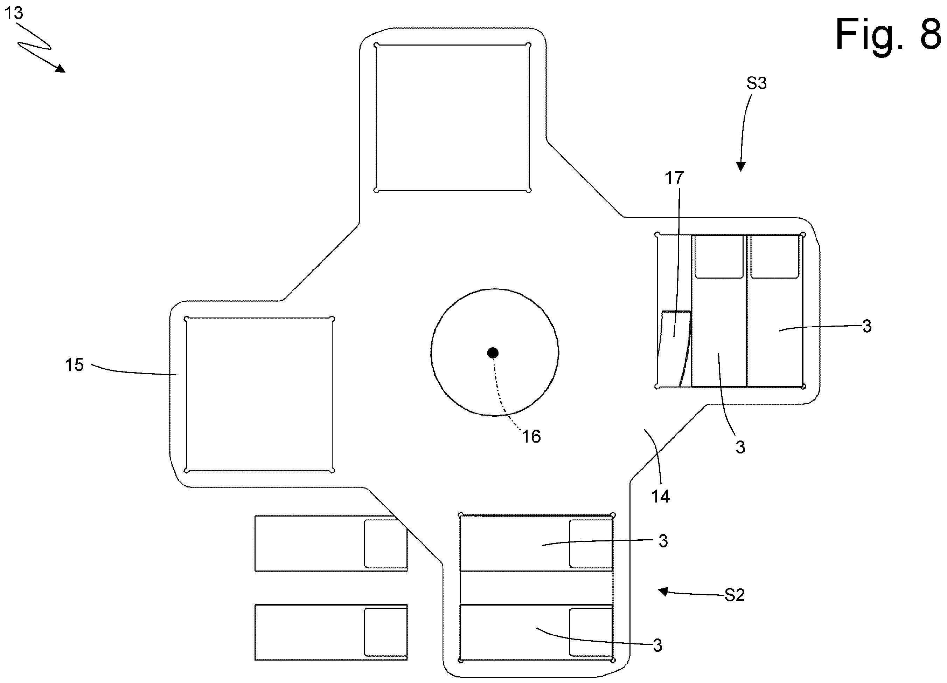

The transport drum 14 supports a plurality of pockets 15 designed each to contain a pair of sealed wraps 3 side by side (and arranged initially at a given distance from one another), and is mounted rotating (with intermittent motion, i.e. in a "*stepped*" manner) around a vertical rotation axis 16 (therefore perpendicular to the wrapping path P1, which is horizontal) to advance each pocket 15 along a circular transport path P2 between the transfer station S2 where the pocket 15 receives a pair of sealed wraps 3 side by side (and arranged at a given distance from one another) from the wrapping conveyor 11 and a transfer station S3 where the pocket 15 releases the pair of sealed wraps 3 side by side (and arranged in mutual contact). That is to say, as shown clearly in Figure 8, along the transport path P2 (i.e. between the transfer stations S2 and S3), two sealed wraps 3 side by side housed in a pocket 15 of the transport drum 14 are brought closer to one another until they are in mutual contact. In other words, along the transport path P2 from transfer station S2 to transfer station S3, the two sealed wraps 3 side by side are pushed towards one another so as to eliminate the mutual distance between them (i.e. initially in the transfer station S2, the two sealed wraps 3 side by side are at a given distance from one another, whereas at the end in the transfer station S8, the two sealed wraps 3 side by side are in mutual contact).

According to a preferred embodiment, the wrapping drum 14 is arranged higher than the wrapping conveyor 11 and therefore, in the transfer station S2, a pushing member (lifter) is provided that is vertically movable from the bottom upwards and is designed to transfer a pair of sealed wraps 3 side by side (and arranged at a given distance from one another) from the underlying wrapping conveyor 11 to an overlying pocket 15 of the transport drum 14 (i.e. the pair of sealed wraps 3 side by side enter from the bottom into the respective pocket 15 of the transport drum 14).

According to a preferred embodiment, in the transfer station S3 as well, a pushing member (lifter) is provided that is vertically movable from the bottom upwards and is designed to transfer a pair of sealed wraps 3 side by side (and arranged in mutual contact) from an underlying pocket 15 of the transport drum 14 to an overlying pocket of the subsequent wrapping drum (i.e. the pair of sealed wraps 3 side by side exits from the top of the respective pocket 15 of the transport drum 14).

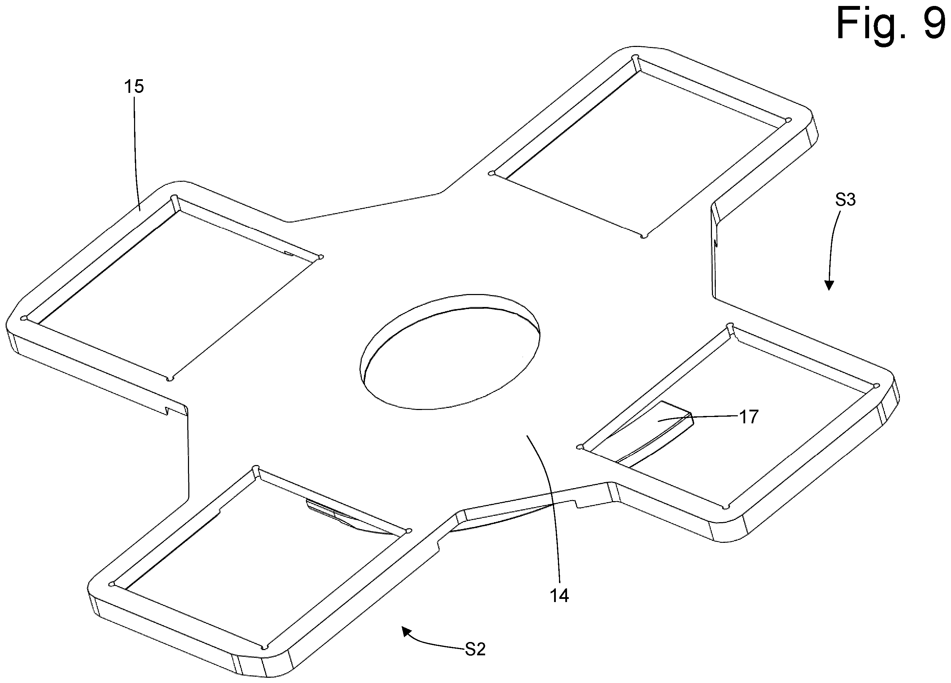

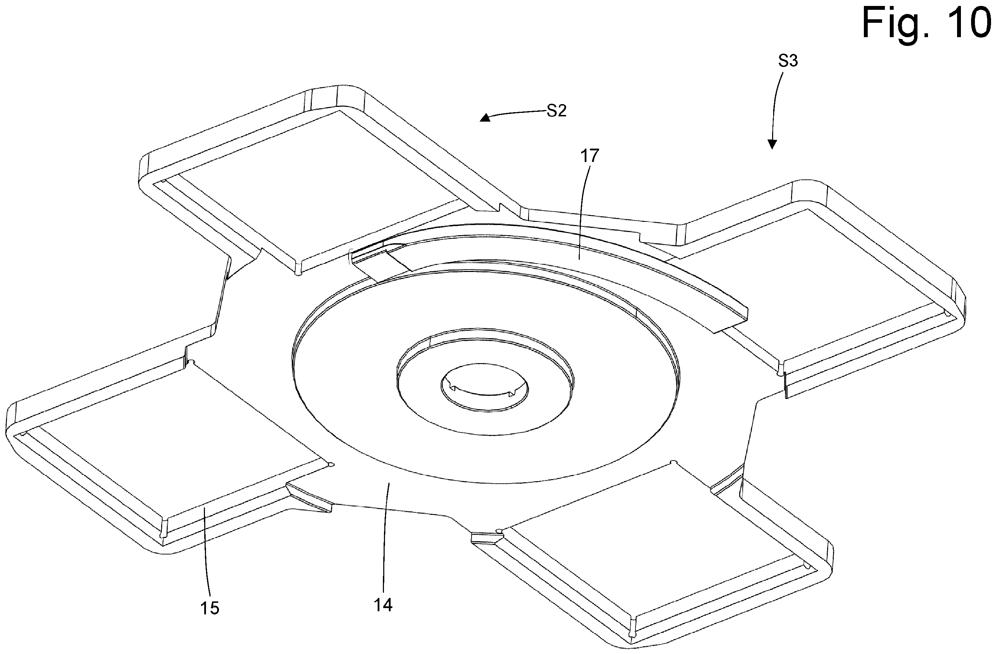

According to what is shown in Figures 8 to 11, the transport drum 11 comprises a pushing element 17 that extends between the transfer station S2 and the transfer station S3 and is arranged in a fixed position; i.e., the pushing element 17 is fixed to a frame of the wrapping unit 10 and does not rotate together with the transport drum 14 so that, during rotation of the transport drum 14, a relative movement is generated between each pocket 15 and the pushing element 17. The pushing element 17 is shaped so as to progressively push a sealed wrap 3 lying inside the pocket 15 towards the other sealed wrap 3 lying inside the pocket 15 so that, in the transfer station S3, the two sealed wraps 3 lying inside the pocket 15 are in mutual contact. In other words, the pushing element 17 has a non-circular development (i.e. it does not have a circular symmetry) around the rotation axis 16, so that the pushing element 17 is outside the pocket 15 that is located in the transfer station S2 and so that the pushing element 17 is inside the pocket 15 that is located in the transfer station S3.

In other words, the pushing element 17 constitutes a cam, or a shaped component that transforms a law of rotary motion (generated by the rotation of the transport drum 14 around the rotation axis 16) into a law of linear and radially oriented motion that pushes a sealed wrap 3 lying in the pocket 15 towards the other sealed wrap 3 lying in the pocket 15.

Obviously, each pocket 15 is shaped to allow the entry of the pushing element 17 between the transfer station S2 and the transfer station S3; i.e. each pocket 15 comprises an opening that allows the entry of the pushing element 17 between the transfer station S2 and the transfer station S3.

Each pocket 15 comprises a perimeter frame of rectangular shape that is open at the bottom and at the top and defines a lateral containment for the two sealed wraps 3 side by side lying in the pocket 15. Between the transfer station S2 and the transfer station S3, a static plane (which is fixed and therefore solidly constrained to the frame of the wrapping unit 10) is provided, on which the two sealed wraps 3 side by side lying in a pocket 15 rest and slide while they move from the transfer station S2 to the transfer station S3. Preferably, between the transfer station S2 and the transfer station S3, an upper containment element (which is fixed and therefore solidly constrained to the frame of the wrapping unit 10) is provided, which is located above the pocket 15 and prevents the two sealed wraps 3 side by side lying in a pocket 15 from "slipping" upwards while they move from the transfer station S2 to the transfer station S3.

According to a different embodiment not shown, the pushing element 17 could start more downstream of the transfer station S2 and/or could end more upstream of the transfer station S3.

In the embodiment shown in the appended claims, a single pushing element 17 arranged internally (i.e. it pushes a sealed wrap 3 lying in a pocket 15 towards the outside, i.e. away from the rotation axis 16) is provided. According to an alternative embodiment not shown, a single pushing element 17 arranged externally (i.e. it pushes a sealed wrap 3 lying in a pocket 15 towards the inside, i.e. towards the rotation axis 16) is provided. According to a further embodiment not shown, both a pushing element 17 arranged internally and a pushing element 17 arranged externally are provided, so as to push both sealed wraps 3 lying inside a pocket 15 towards one another. The presence of two pushing elements 17 allows the stresses to which the two sealed wraps 3 lying inside a pocket 15 are subjected to be halved, since it divides the movement between both sealed wraps 3 (i.e., rather than moving a single sealed wrap 3 by a given distance, both sealed wraps 3 are moved by half of this distance).

The embodiments described here can be combined with each other without deviating from the scope of protection of the present invention.

The wrapping unit 10 described above has numerous advantages.

In the first place, the wrapping unit 10 described above allows two sealed wraps 3 side by side to be brought close together in a simple and economical manner, i.e. without using any motor but only a fixed profile (the pushing element 17).

Furthermore, the wrapping unit 10 described above allows two sealed wraps 3 side by side to be brought close together subjecting the two sealed wraps 3 side by side to minimal stresses even when operating at a high production speed (measured as packets 1 of cigarettes produced per unit of time); this result is obtained thanks to the fact that the two sealed wraps 3 are brought closer together progressively, since this is performed a little at a time along the entire extension of the transport path P2.

The embodiments shown in the appended figures relate to the manufacture of a packet of cigarettes, but the present invention is applicable without substantial amendments also to the manufacture of any type of packet for smoking articles (such as a packet of cigars, a packet of electronic cigarettes of the liquid vaporisation type, a packet of new-generation cigarettes without combustion of the tobacco, etc.).

### LIST OF REFERENCE NUMBERS OF THE FIGURES

- 1: packet of cigarettes
- 2: container
- 3: sealed wrap
- 4: lid
- 5: group of cigarettes
- 6: extraction opening
- 7: closing label
- 8: wrapping sheet
- 9: reinforcement element
- 10: wrapping unit
- 11: wrapping conveyor
- 12: folding device
- 13: sealing device
- 14: transport drum
- 15: pockets
- 16: rotation axis
- 17: pushing element
- S1: transfer station
- S2: transfer station
- S3: transfer station
- P1: wrapping path
- P2: transport path

## Claims

1. A wrapping unit (10) to produce, together, two sealed wraps (3) containing two corresponding groups (5) of smoking articles; the wrapping unit (10) comprises:
a first transfer station (S2);
a second transfer station (S3); and
a transport drum (14), which is provided with at least one pocket (15) designed to contain the two sealed wraps (3) side by side and is mounted so as to rotate around a rotation axis (16) in order to move the pocket (15) from the first transfer station (S2), where the pocket (15) is configured to receive the two sealed wraps (3) side by side and arranged at a given distance from one another, and the second transfer station (S3), where the pocket (15) is configured to release the two sealed wraps (3) side by side;
the wrapping unit (10) is **characterized in that** it comprises at least one pushing element (17), which is completely and entirely fixed to a frame of the wrapping unit (10) and therefore has no part of it that rotates together with the transport drum (14), has no moving parts, extends between the first transfer station (S2) and the second transfer station (S3) and is shaped so as to come into contact with a sealed wrap (3) which lies inside the pocket and progressively push the sealed wrap (3), which lies inside the pocket (15), towards the other sealed wrap (3), which lies inside the pocket (15), so that, in the second transfer station (S3), the two sealed wraps (3), which lie inside the pocket (15), are closer to one another with respect to the first transfer station (S2).

2. The wrapping unit (10) according to claim 1, wherein the pushing element (17) is shaped so as to progressively push a sealed wrap (3) lying inside the pocket (15) towards the other sealed wrap (3) lying inside the pocket (15) so that, in the second transfer station (S3), the two sealed wraps (3) lying inside the pocket (15) are in mutual contact.

3. The wrapping unit (10) according to claim 1 or 2, wherein, during rotation of the transport drum (14), a relative movement is generated between the pocket (15) and the pushing element (17).

4. The wrapping unit (10) according to claim 1, 2 or 3, wherein the pushing element (17) has a non-circular development relative to the rotation axis (16), so that the pushing element (17) is radially outside an axial projection of the pocket (15) when the pocket (15) is in the first transfer station (S2) and so that the pushing element (17) is radially inside the axial projection of the pocket (15) when the pocket (15) is in the second transfer station (S2).

5. The wrapping unit (10) according to one of claims 1 to 4, wherein the pushing element (17) has a non-circular development relative to the rotation axis (16), so that an outer edge of the pushing element (17) is radially closer to the rotation axis (16) with respect to an inner edge of the pocket (15) when the pocket (15) is in the first transfer station (S2) and so that the outer edge of the pushing element (17) is radially further away from the rotation axis (16) with respect to the inner edge of the pocket (15) when the pocket (15) is in the second transfer station (S2).

6. The wrapping unit (10) according to one of claims from 1 to 5, wherein the pushing element (17) constitutes a shaped component, which transforms a law of rotary motion generated by the rotation of the transport drum (14) around the rotation axis (16) into a law of linear and radially oriented motion, which pushes a sealed wrap (3) lying in the pocket (15) towards the other sealed wrap (3) lying in the pocket (15).

7. The wrapping unit (10) according to one of the claims from 1 to 6 and comprising a single pushing element (17), which is arranged radially more internally relative to the pocket (15) and, therefore, is configured to push a sealed wrap (3) lying in the pocket (15) radially outwards.

8. The wrapping unit (10) according to one of the claims from 1 to 7 and comprising a single pushing element (17), which is arranged radially more externally relative to the pocket (15) and, therefore, is configured to push a sealed wrap (3) lying in the pocket (15) radially inwards.

9. The wrapping unit (10) according to one of the claims from 1 to 7 and comprising:
a first pushing element (17), which is arranged radially more inside relative to the pocket (15) and, therefore, is configured to push a first sealed wrap (3) lying in the pocket (15) radially outwards; and
a second pushing element (17), which is arranged radially more outside relative to the pocket (15) and, therefore, is configured to push a second sealed wrap (3) lying in the pocket (15) radially inwards.

10. The wrapping unit (10) according to one of the claims from 1 to 9 and comprising:
a first pushing member, which is movable parallel to the rotation axis (16) and vertically from the bottom upwards and is designed to transfer the pair of sealed wraps (3) side by side and arranged at a given distance from one another from the bottom towards the overlying pocket (15), which is located in the first transfer station (S2); and
a second pushing member, which is movable parallel to the rotation axis (16) and vertically from the bottom upwards and is designed to transfer the pair of sealed wraps (3) side by side and arranged in mutual contact from the underlying pocket (15) lying in the second transfer station (S3) upwards.

11. The wrapping unit (10) according to one of the claims from 1 to 10 and comprising:
a third transfer station (S1);
a wrapping conveyor (11), which receives, in the third transfer station (S1), a pair of groups (5) of smoking articles side by side and coupled to respective wrapping sheets (8) and is designed to convey the pair of groups (5) of smoking articles side by side and coupled to the wrapping sheets (8) along a straight wrapping path (P1) up to the first transfer station (S2);
two folding devices (12), each coupled to the wrapping conveyor (11) and configured to fold a wrapping sheet (8) around the corresponding group (5) of smoking articles, thus completing the formation of the sealed wrap (3).

12. The wrapping unit (10) according to claim 11 and comprising two sealing devices (13), each coupled to the wrapping conveyor (11) and configured to make longitudinal seals on a wrapping sheet (8) folded around the group (5) of smoking articles.

13. A wrapping method to produce, together, two sealed wraps (3) containing two corresponding groups (5) of smoking articles; the wrapping method comprises the steps of:
moving, by means of a transport drum (14) mounted so as to rotate around a rotation axis (16), at least one pocket (15) designed to contain the two sealed wraps (3) side by side from a first transfer station (S2) to a second transfer station (S3);
inserting, in the first transfer station (S2), the two sealed wraps (3) side by side and arranged at a given distance from one another into the pocket (15); and
retrieving, in the second transfer station (S3), the two sealed wraps (3) side by side from the pocket (15);
the wrapping method is **characterized in that** it comprises the step of progressively pushing, by means of at least one pushing element (17), which is completely and entirely fixed to a frame of a wrapping unit (10) and therefore has no part of it that rotates together with the transport drum (14), has no moving parts, and extends between the first transfer station (S2) and the second transfer station (S3), a sealed wrap (3), which lies inside the pocket (15), towards the other sealed wrap (3), which lies inside the pocket (15), so that, in the second transfer station (S3), the two sealed wraps (3), which lie inside the pocket (15), are closer to one another with respect to the first transfer station (S2).
